# EUROPEAN PATENT APPLICATION

(11) **EP 2 154 902 A1**
(43) Date of publication of application: **17.02.2010**
(21) Application number: 08757841.5
(22) Date of filing: 25.06.2008
(51) Int. Cl.: H04Q 1/00

(54) **METHOD AND SYSTEM FOR ACCESS CONTROL OF HOME NODE B**

(30) Priority: 25.06.2007 CN 200710123494
(71) Applicant: Huawei Technologies Co., Ltd., Longgang District, Shenzhen Guangdong 518129 (CN)
(72) Inventor: NIU, Weiguo, Shenzhen, Guangdong 518129 (CN); YANG, Li, Shenzhen, Guangdong 518129 (CN)
(74) Representative: Kreuz, Georg Maria
(86) International application number: PCT/CN2008/071432
(87) International publication number: WO 2009/000206

(57) **Abstract**

A home Node B access control method provided herein includes: by a security access gateway, receiving access request information from a home Node B; forwarding the access request information to a network node capable of authentication for authenticating; and exercising access control for the home Node B according to the authentication result. A home Node B access control system is also provided herein. The method and the system for controlling the home Node B access ensure the security of the mobile network, stability of the wireless environment, and implementation of the operator policies. The access control is performed before the network allocates resources to the home Node B, thus avoiding waste of network resources and preventing unqualified home Node Bs from accessing the network.

## Description

### FIELD OF THE INVENTION

The present invention relates to a method for a home Node B to access a mobile network, and in particular, to a method for controlling access from a home Node B to a mobile network. In addition, the present invention relates to a home Node B access control system, and in particular, to a system that controls a home node B to access a mobile network effectively.

### BACKGROUND

In the current mobile communication network, the deployment of network nodes are generally planned by the operator beforehand, and the network is deployed according to such a plan. The users in the same area in the network share the resources of the cell. When a high-rate and high-bandwidth service occurs, the service brings an impact onto other users. Besides, the network coverage is limited, especially in indoor areas. As a home micro basestation, the home Node B covers the hotspots such as home premises and office areas. The home Node B accesses the mobile communication network through an Internet to obtain wireless communication services. The home Node B overcomes the bottleneck of air interface resources in the wireless data service, enables a user to enjoy high-rate and high-bandwidth network services, optimizes the network coverage, and provides better services for the user. However, the home Node B that requests to access the network needs to be controlled effectively.

In the prior art, the network node access control is exercised in two modes. In the first mode, the time and the place of accessing a wide-coverage basestation (namely, a macro Node B) and the configuration at the time of access are known to the wireless network. Therefore, the access of a macro Node B is planned by the operator beforehand. To let a macro Node B access the network, the operator needs only to configure the access parameters according to the network planning data, without a special control mechanism. In the second mode, the network planning may cover the Node B or not. If the network planning covers the Node B, for example, a macro Node B, the operator lets the macro Node B access the network by using the network planning data in view of the first mode described above; if the network planning does not cover the Node B, for example, a home Node B, the operator allows the home Node B to access the network directly without special access control, and rejects the call requests from illegal home Node Bs (including illegal accessing nodes and illegal location of the accessing node) in the network operation process.

The foregoing two network node access control modes are defective in the following aspects:
In the first mode, the home Node Bs are numerous and far more than macro Node Bs. It is difficult for the network planning data to cover all home Node Bs. The huge number of home Node Bs imposes difficulty onto network planning. Moreover, the access time and the access place of the home Node B are controlled by the user, and are random and unpredictable to the network. Therefore, it is impossible for the network planning to cover the home Node B access.
In the second mode, the network planning is unable to cover the home Node B and the defect is more evident. First, the home Node B that requests to access the network is uncontrollable, and illegal home Node Bs may access the network easily. For example, the unauthorized or non-standard home Node Bs or malicious home Node Bs may access the network. Once such home Node Bs access the network, the network needs to allocate the corresponding resources such as link resource and radio resource to them, thus leading to network insecurity and waste of network resources. Secondly, it is possible that the home Node B accesses the network at an improper location. For example, the home Node B accesses the network in a roaming area. That is, if a home Node B is registered in one area and accesses the registration area network through the Internet in a remote area, the home Node B brings impact onto the wireless environment in the remote area. Moreover, the radio resource (such as frequency) allocated by the registration area network to the home Node B conflicts with the wireless environment planning of the remote area. Consequently, the resource allocation is disorderly, network planning and coordination are disrupted, and the network operation policies of the operator are affected.

### SUMMARY

One aspect of the present invention is to provide a home Node B access control method, another aspect of the present invention is to provide a home Node B access control system, and another aspect of the present invention is to provide a communication device.

In order to fulfill the first aspect of the present invention, the present invention provides a home Node B access control method, which generally includes:
by a security access gateway, receiving access request information from a home Node B;
forwarding the access request information to a network node capable of authentication for authenticating; and
exercising access control for the home Node B according to the authentication result.

This method ensures security of the mobile network, stability of the wireless environment, and implementation of the operator policies, and provides better services for the users.

In order to fulfill the second aspect of the present invention, the present invention provides a home Node B access control system, which generally includes:
a home Node B, adapted to send access request information of the home Node B;
a security access gateway, adapted to: receive and forward the access request information of the home Node B, and control the home Node B access according to the authentication result; and
a first function module, adapted to perform access authentication for the home Node B according to the received access request information.

The present invention also provides a communication device, which is adapted to control the home Node B access and generally includes:
an information receiving and forwarding module, adapted to receive access request information from a home Node B;
a sending module, adapted to forward the access request information; and
a control module, adapted to exercise access control for the home Node B according to the authentication result.

The system under the present invention enhances the network security, avoids waste of network resources, facilitates the user and the operator, and reduces costs.

### BRIEF DESCRIPTION OF THE DRAWINGS

FIG. 1 is a flowchart of a home Node B access control method in an embodiment of the present invention;
FIG. 2 is a flowchart of an access control method with an Element Management System (EMS) authenticating the physical identifier of a home Node B in an embodiment of the present invention;
FIG. 3 is a flowchart of an access control method with an Element Management System (EMS) authenticating the physical identifier of a home Node B in another embodiment of the present invention;
FIG. 4 is a flowchart of an access control method with a subscription information authentication server performing authentication according to an identifier of a home Node B in an embodiment of the present invention;
FIG. 5 is a flowchart of an access control method which performs authentication through measurement information of a home Node B in an embodiment of the present invention;
FIG. 6 is a flowchart of an access control method which performs authentication through geographic information of a home Node B in an embodiment of the present invention;
FIG. 7 is a flowchart of an access control method performed according to home location information in the home Node B address information in an embodiment of the present invention;
FIG. 8 is a flowchart of an access control method performed according to the IP address of an authorized home Node B in an embodiment of the present invention;
FIG. 9 is a flowchart of an access control method performed according to a binding relation between a home Node B and an Internet address in an embodiment of the present invention;
FIG. 10 is a signaling flowchart of a home Node B access control method in an embodiment of the present invention;
FIG. 11 is a flowchart of establishing transport-layer security link between a home Node B and a mobile network in an embodiment of the present invention; and
FIG. 12 shows a structure of a home Node B access control system in an embodiment of the present invention.

### DETAILED DESCRIPTION

In order to make the technical solution, objectives and merits of the present invention clearer, the following describes the embodiments of the present invention in more detail with reference to accompanying drawings.

### Embodiment 1

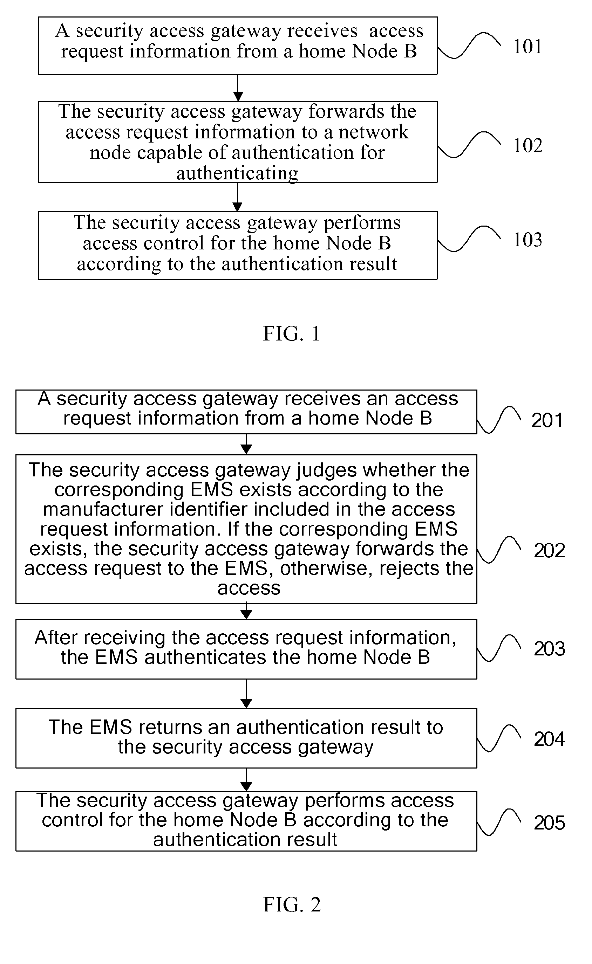

As shown in FIG. 1, a home Node B access control method includes:
Step 101: A security access gateway receives access request information from a home Node B;
step 102: The security access gateway forwards the access request information to a network node capable of authentication for authenticating; and
step 103: The security access gateway performs access control for the home Node B according to the authentication result.

The method under the present invention controls the home Node B access automatically after the home Node B is powered on and needs to access the network, without involving manual operation or indication of network planning data. Therefore, the operator and the user use the home Node B more easily, and the home Node B accesses the network more easily and cost-efficiently. Besides, the method performs access control before the network allocates network resources to the home Node B, thus avoiding waste of network resources, and preventing the unqualified home Node Bs from accessing the network.

### Embodiment 2

Based on the first embodiment, when the home Node B accesses the mobile network through the Internet, because the user may start the access anytime anywhere, the network is unable to predict or plan the access time and the access place of the home Node B. Therefore, the home Node B access imposes new requirements on the network resource management. Moreover, the change of the home Node B access place exerts certain influence on the allocation and coordination of network resources, the wireless environment, and the charging policies of the operator. Therefore, the home Node B access needs to be controlled with a policy.

As shown in FIG. 2, this embodiment differs from the first embodiment in that: The security access gateway forwards the access request information to the network node capable of authentication for authenticating, and the authentication is a process of the device authentication server authenticating the physical identifier of the home Node B; the security access gateway checks whether the corresponding device authentication server exists according to the device authentication server information in the access request information. If the corresponding device authentication server exists, the security access gateway forwards the access request information to the device authentication server; otherwise, the security access gateway rejects the access; after receiving the access request information, the device authentication server authenticates the home Node B, and selects the EMS as a device authentication server to authenticate the physical identifier of the home Node B. Due to privacy of the interface between the home Node B and the EMS, it is possible that each home Node B of a different model from a different manufacturer can access only the corresponding EMS. If the home Node B is incompatible with the accessed EMS when sending access request information, the network may reject the access, and allocate no resource.

The home Node B sends the access request information to the security access gateway. The access request information includes the device identifier information of the home Node B. The device identifier information includes the information such as manufacturer identifier and device model. The detailed steps of access control are as follows:
Step 201: The security access gateway receives access request information from a home Node B.
Step 202: The security access gateway specifies the corresponding EMS for the home Node B according to the manufacturer identifier included in the access request information, and forwards the access request information to the EMS.

Specifically, the security access gateway judges whether the corresponding EMS exists according to the manufacturer identifier included in the access request information. If the corresponding EMS exists, the security access gateway forwards the access request information to the EMS, or else rejects the access.

Step 203: After receiving the access request information, the EMS authenticates the home Node B.

Step 204: The EMS returns an authentication result to the security access gateway.

Step 205: The security access gateway performs access control for the home Node B according to the authentication result.

The security access gateway receives the authentication result, and allows the home Node B to access the network if the authentication succeeds, or rejects the home Node B from accessing the network if the authentication fails.

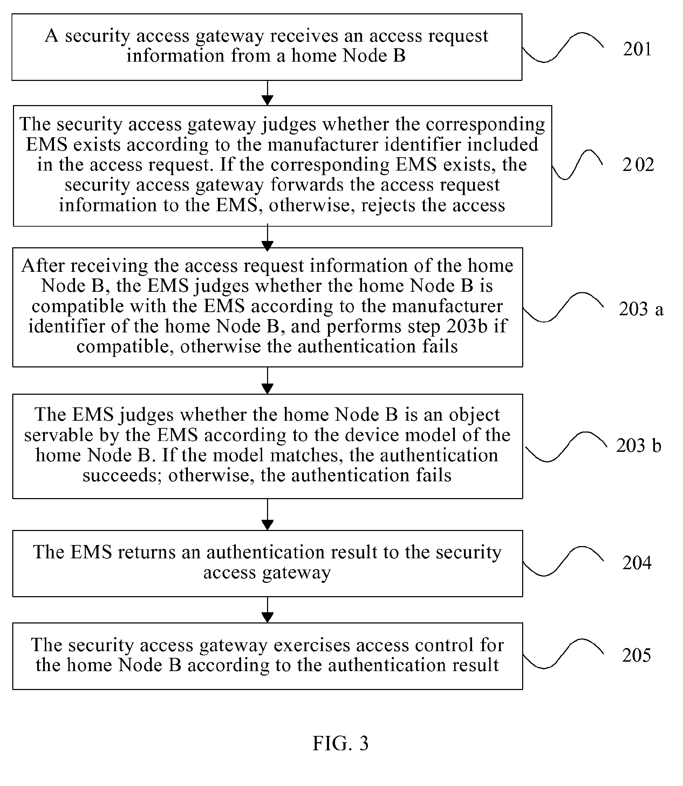

Further, as shown in FIG. 3, after receiving the access request information in step 203, the EMS authenticates the home Node B in the following way:
Step 203a: After receiving the access request information of the home Node B, the EMS judges whether the home Node B is compatible with the EMS according to the manufacturer identifier of the home Node B, and performs step 203b if compatible, or else the authentication fails.
Step 203b: The EMS judges whether the home Node B is a service object of the EMS according to the device model of the home Node B. If the model matches, the authentication succeeds; otherwise, the authentication fails.
The EMS returns a decision result to the access gateway, and the access gateway decides to accept or reject the access of the home Node B according to the decision result of the EMS.

### Embodiment 3

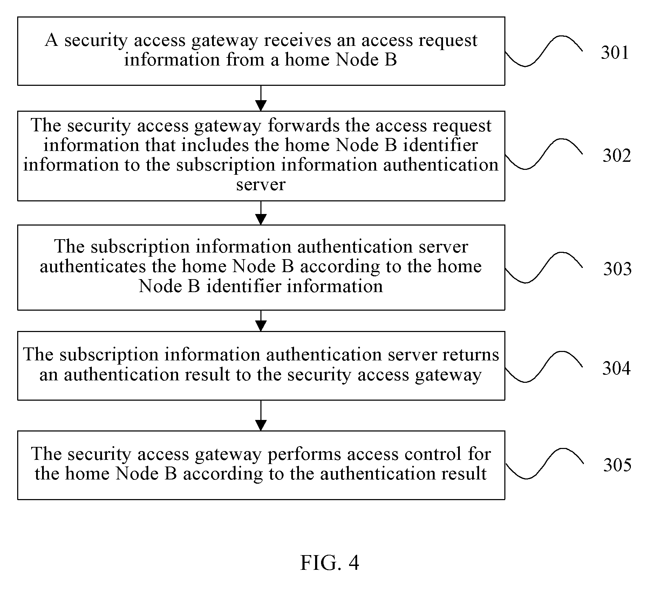

The identity and subscription information of the requesting home Node B need to be authenticated in order to prevent illegal or unauthorized home Node Bs from accessing the network and prevent malicious access of home Node Bs. As shown in FIG. 4, this embodiment differs from the first embodiment and the second embodiment in that: The security access gateway forwards the access request information to the network node capable of authentication for authenticating, and the authentication is an access authentication process performed by the subscription information authentication server according to the identifier information of the home Node B.

The home Node B sends the access request information to the security access gateway in the mobile network. The access request information includes the identifier information of the home Node B. The identifier information includes the subscription identifier information of the home Node B. The detailed steps of access control are as follows:
Step 301: The security access gateway receives access request information from a home Node B.
Step 302: The security access gateway forwards the access request information that includes the home Node B identifier information to the subscription information authentication server.

The subscription information authentication server may be an AAA server, and the access request information includes the home Node B identifier information.
Step 303: The subscription information authentication server authenticates the home Node B according to the home Node B identifier information.

According to the home Node B identifier information, the subscription information authentication server authenticates the identity of the home Node B, and judges the legality of the home Node B identity and the correctness of the access rights (such as payment information).
Step 304: The subscription information authentication server returns an authentication result to the security access gateway.
Step 305: The security access gateway performs access control for the home Node B according to the authentication result.

The subscription information authentication server returns an authentication result to the security access gateway. The security access gateway decides whether to accept or reject the access of the home Node B according to the authentication result returned by the subscription information authentication server.

### Embodiment 4

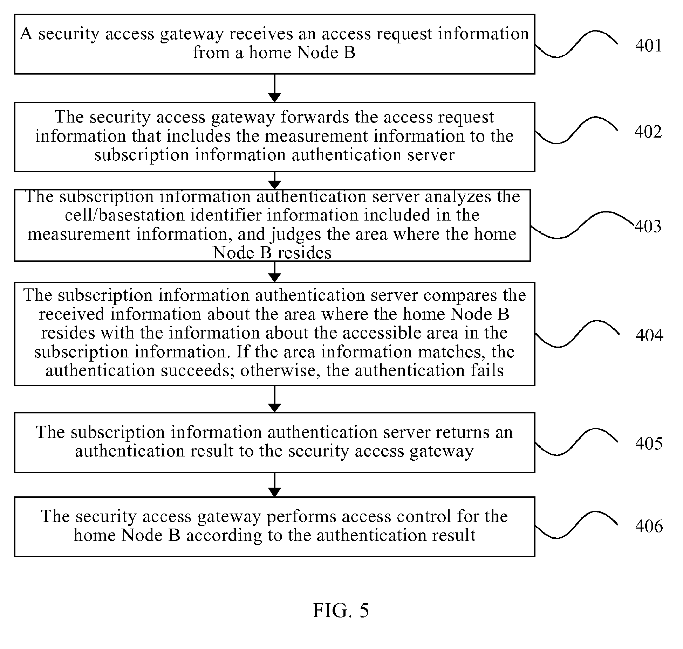

As shown in FIG. 5, this embodiment differs from the first, second and third embodiments in that: The security access gateway forwards the access request information to the network node capable of authentication for authenticating, and the authentication is an access authentication process performed by the subscription information authentication server according to measurement information of the home Node B.

When the home Node B accesses the network, the home Node B needs to provide the information about measurement for the surroundings, and the access authentication is performed according to the measurement information. The measurement information may be obtained by measuring the surroundings after the home Node B is powered on; or the mobile station bound to the home Node B measures the surroundings of the home Node B to obtain the measurement information. The measurement includes at least the identifier of the existing cell/basestation in the position of the home Node B. The home Node B needs to perform the measurement automatically after power-on. The home Node B sends access request information to the access gateway through the Internet. The access request information includes the surroundings measurement information. The detailed access control steps are as follows:
Step 401: The security access gateway receives the access request information from a home Node B.
Step 402: The security access gateway forwards the access request information that includes the measurement information to the subscription information authentication server.
Step 403: The subscription information authentication server analyzes the cell/basestation identifier information included in the measurement information, and judges where the home Node B resides.

The access gateway forwards the measurement information to the subscription information authentication server. The subscription information authentication server analyzes the existing cell/basestation identifier in the measurement information of the home Node B, and judges the area where the home Node B resides.
Step 404: The subscription information authentication server compares the area information of the home Node B resides with the information about the area information which is entitled to access and included in the subscription information. If the area information of the home Node B resides accords with the information about the area information which is entitled to access and included in the subscription information, the authentication succeeds; otherwise, the authentication fails.
Step 405: The subscription information authentication server returns an authentication result to the security access gateway.
Step 406: The security access gateway performs access control for the home Node B according to the authentication result.

### Embodiment 5

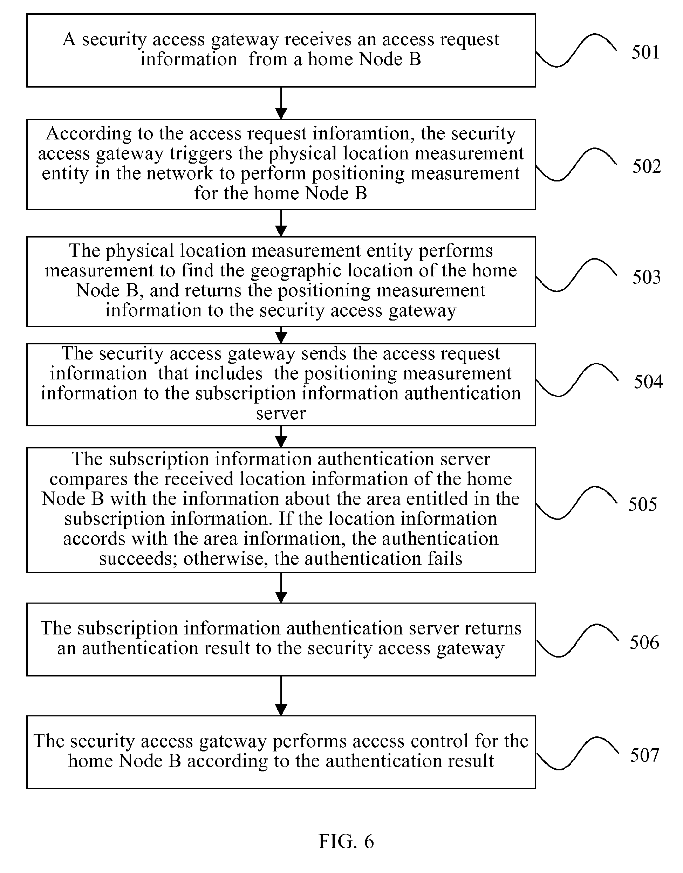

As shown in FIG. 6, this embodiment differs from the first, second, third and fourth embodiments in that: The security access gateway forwards the access request information to the network node capable of authentication for authenticating, and the authentication is an access authentication process performed by the subscription information authentication server according to geographic location information of the home Node B.

After being powered on, the home Node B sends access request information to the access gateway through the Internet. The detailed access control steps are as follows:
Step 501: The security access gateway receives access request information from a home Node B.
Step 502: According to the access request information, the security access gateway triggers the physical location measurement entity in the network to perform positioning measurement for the home Node B.

After receiving the access request information, the security access gateway triggers the corresponding physical location measurement entity to perform positioning measurement for the home Node B according to the relevant information in the access request information.
Step 503: The physical location measurement entity performs measurement to find the geographic location of the home Node B, and returns the positioning measurement information to the security access gateway.

The physical location measurement entity in the network searches for the geographic location of the home Node B according to the access request information, and returns the positioning measurement information to the security access gateway. The physical location measurement entity in the network may perform positioning measurement for the home Node B through a Global Positioning System (GPS) mechanism or an Observed Time Difference of Arrival (OTDOA) mechanism, and report the result to the access gateway.
Step 504: The security access gateway sends the access request information that includes the positioning measurement information to the subscription information authentication server.
Step 505: The subscription information authentication server compares the positioning measurement information of the home Node B with the information about the accessible area in the subscription information. If the positioning measurement information of the home Node B accords with area information which is entitled to access and included in subscription information, the authentication succeeds; otherwise, the authentication fails.
Step 506: The subscription information authentication server returns an authentication result to the security access gateway.
Step 507: The security access gateway performs access control for the home Node B according to the authentication result.

The subscription information authentication server returns an authentication result to the security access gateway. The security access gateway decides whether to accept or reject the access of the home Node B according to the authentication result returned by the subscription information authentication server.

### Embodiment 6

This embodiment differs from the foregoing embodiments in that: The security access gateway forwards the access request information to the network node capable of authentication for authenticating, and the authentication is: After receiving the access request information forwarded by the security access gateway, the subscription information authentication server analyzes and authenticates the network address information of the home Node B in the access request information.

The home Node B accesses the network of the mobile operator through the Internet. When the home Node B requests to access the network, the security access gateway controls the access according to the Internet address information of the home Node B. More specifically: First, the home Node B sends access request information to the security access gateway through the Internet. The access request information includes the Internet address information of the home Node B. Afterward, the security access gateway analyzes the Internet address information of the home Node B, and controls the access according to the address information. There are two access control modes: The first mode is access control performed according to the area of the Internet address information of the home Node B; and the second mode is access control performed according to the binding relation between the home Node B and the Internet address.

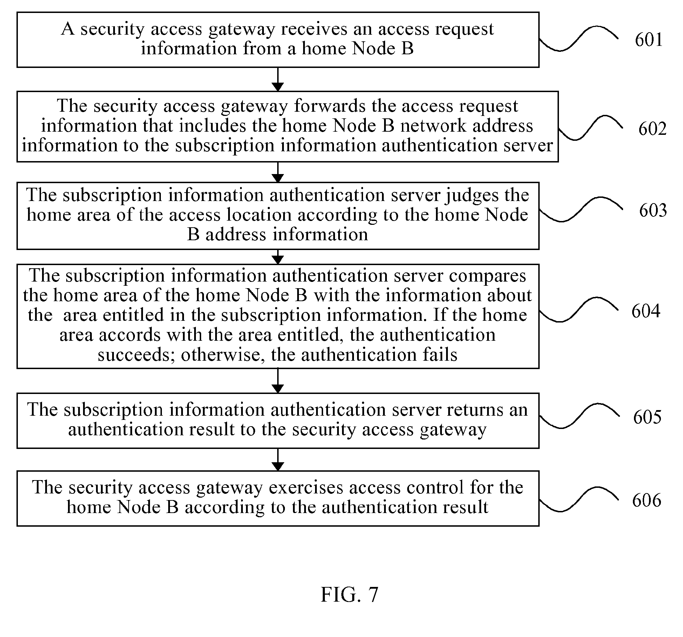

The Internet addresses are allocated according to geographic areas. For example, the Internet Protocol (IP) addresses are allocated according to geographic areas. Therefore, the security access gateway may determine whether the home Node B can access the network according to the home location of the Internet address of the home Node B. As shown in FIG. 7, in the first access control mode, the subscription information authentication server determines the home location of the access location of the home Node B according to the Internet address information of the home Node B, compares the access location with the location which is entitled to access, and controls the access according to the comparison result. The detailed access control steps are as follows:
Step 601: The security access gateway receives access request information from a home Node B.
Step 602: The security access gateway forwards the access request information that includes the home Node B network address information to the subscription information authentication server.
Step 603: The subscription information authentication server determines the home location information of the home Node B according to the Internet address information the home Node B.
Step 604: The subscription information authentication server compares the home location information of the home Node B with the location information which is entitled to access and included in subscription information. If the home location information of the home Node B accords with the location information which is entitled to access and included in subscription information, the authentication succeeds; otherwise, the authentication fails.
Step 605: The subscription information authentication server returns an authentication result to the security access gateway.
Step 606: The security access gateway performs access control for the home Node B according to the authentication result.

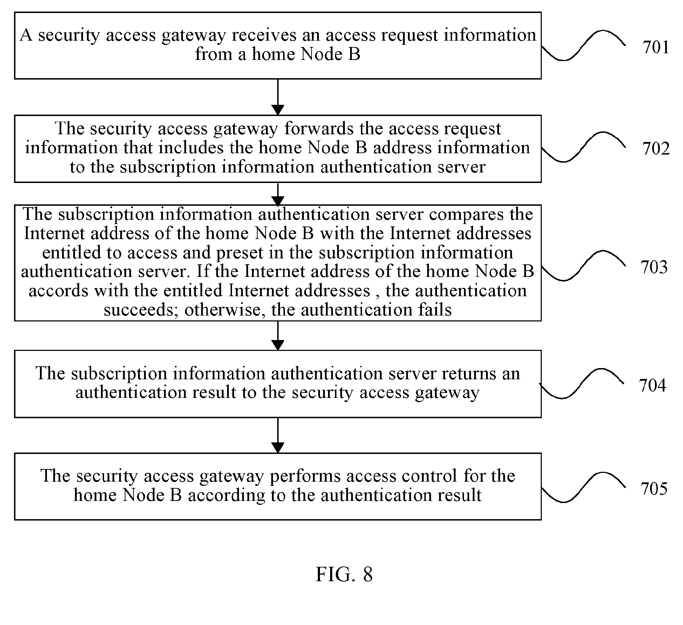

As shown in FIG. 8, in the first access control mode, the subscription information server may set that only the home Node Bs of specified network addresses can access the network, and reject the access from the home Node Bs outside the specified network addresses. The detailed access control steps are as follows:
Step 701: The security access gateway receives access request information from a home Node B.
Step 702: The security access gateway forwards the access request information that includes the home Node B address information to the subscription information authentication server.
Step 703: The subscription information authentication server compares the Internet address information of the home Node B with the Internet address information which is entitled to access and preset in the subscription information authentication server. If the Internet address information of the home Node B accords with the Internet address information which is entitled to access and preset in the subscription information authentication server, the authentication succeeds; otherwise, the authentication fails.
Step 704: The subscription information authentication server returns an authentication result to the security access gateway.
Step 705: The security access gateway performs access control for the home Node B according to the authentication result.

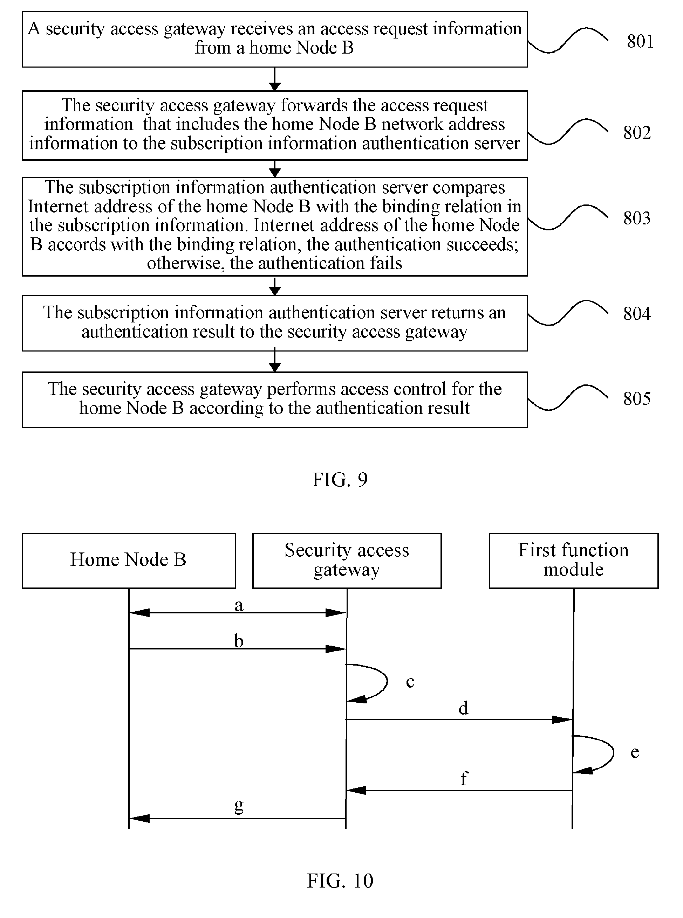

In the second access control mode, the access control is performed according to the binding relation between the home Node B and the Internet address. As shown in FIG. 9, the detailed access control steps are as follows:
Step 801: The security access gateway receives access request information from a home Node B.
Step 802: The security access gateway forwards the access request information that includes the home Node B network address information to the subscription information authentication server.
Step 803: The subscription information authentication server compares the Internet address information of the home Node B with the binding relation information preset in the subscription information. If the Internet address information of the home Node B accords with the binding relation information, the authentication succeeds; otherwise, the authentication fails.
Step 804: The subscription information authentication server returns an authentication result to the security access gateway.
Step 805: The security access gateway performs access control for the home Node B according to the authentication result.

When a home Node B user subscribes to a service, the information about the Internet address that may be accessed by the user is provided for the user, where the Internet address information includes access port information. The network binds the Internet address information with the identifier information of the home Node B, and stores the binding relation information into the subscription information authentication server. The security access gateway controls the access through the binding relation between the home Node B identifier information and the address information. The address information is not limited to a specific address, and may be a narrow range of addresses. For example, for the user with a fixed IP address, the address information may include a group of IP addresses; for a user with a variable IP address, the address information may include port information of the Internet access point, for instance, a layer-2 physical port of the TCP/IP protocol. When making a decision, the security access gateway compares the actually accessed address of the home Node B with the address information in the binding relation information stored in the subscription information authentication server. If the Internet address information of the home Node B accords with the binding relation information, the security access gateway accepts the access, or else rejects the access.

### Embodiment 7

Based on the foregoing embodiments, a transport-layer security link is established between the home Node B and the mobile network before the home Node B accesses the mobile network through the Internet. The security link may be established through the security technologies such as Virtual Private Network (VPN) and IpSec. In the process of establishing security link, mutual authentication needs to be performed between the mobile network and the home Node B through security information. The security information may be unrelated to the home Node B itself. For example, the security credential used by the IpSec may be unrelated to the home Node B itself, and may be another username, password or credential. Nevertheless, the security information may be somewhat related to the information of the home Node B, for example, in a binding relation with the manufacturer or serial number of the home Node B. After completion of the authentication, the EMS performs control to allocate the corresponding resources (such as link resources and wireless resources) to the home Node B, thus completing the access process. Therefore, for the home Node B access control, the access gateway is a control point. Through the support of other network function nodes, the control is exercised before the network allocates the corresponding resources to the home Node B. As shown in FIG. 10, the detailed access control steps are as follows:
Step a: A transport-layer security link is established between the home Node B and the mobile communication network.
Step b: The home Node B sends access request information to the security access gateway.
Step c: The access gateway analyzes the access request information.
Step d: The security access gateway forwards the access request information.
Step e: The network function node performs authentication according to the access request information.
Step f: The network function node returns an authentication result to the security access gateway.
Step g: The security access gateway controls the home Node B access according to the authentication result.

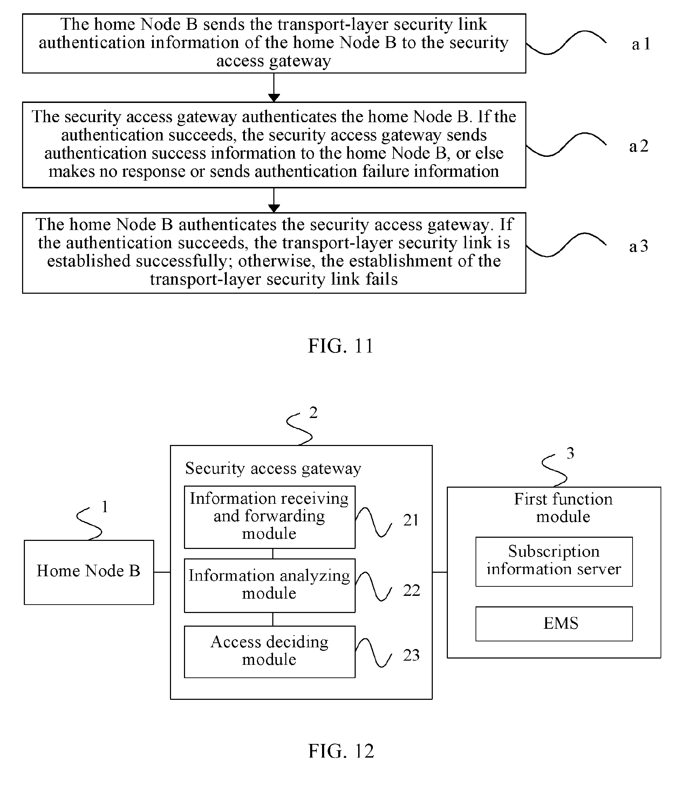

As shown in FIG. 11, the detailed steps of establishing a transport-layer security link are as follows:
Step a1: The home Node B sends the transport-layer security link authentication information of the home Node B to the security access gateway.
Step a2: After receiving the transport-layer security link authentication information of the home Node B, the security access gateway authenticates the home Node B. If the authentication succeeds, the security access gateway sends authentication success information to the home Node B. The authentication success information includes the transport-layer security link authentication information. If the authentication fails, the security access gateway makes no response or sends authentication failure information.
Step a3: The home Node B authenticates the security access gateway. If the authentication succeeds, the transport-layer security link is established successfully; otherwise, the establishment of the transport-layer security link fails.

After receiving the authentication success information sent by the security access gateway, the home Node B authenticates the transport-layer security link of the security access gateway according to the transport-layer security link authentication information of the security access gateway. If the authentication succeeds, the transport-layer security link is established successfully; otherwise, the establishment of the transport-layer security link fails.

Before a transport-layer security link is established between the home Node B and the mobile network, the home Node B needs to know the address of the security access gateway. The address of the security access gateway may be preset on the home Node B, for example, by the mobile operator or the user. Alternatively, when the home Node B requests to access the network, the automatic address allocation server of the public network configures the address of the security access gateway for the home Node B.

The access control method provided in each embodiment above is a solution to an aspect of the access control process. In practice, any of such methods or a combination of such methods can be applied. The specific method to be applied is determined according to the access policies in view of the actual conditions.

It is understandable to those skilled in the art that all or part of the steps of the foregoing method embodiments may be implemented by hardware instructed by a program. The program may be stored in a computer-readable storage medium. When being executed, the program performs steps of the foregoing method embodiments. The storage medium may be any medium suitable for storing program codes, for example, Read Only Memory (ROM), Random Access Memory (RAM), magnetic disk, or compact disk.

### Embodiment 8

As shown in FIG. 12, a home Node B access control system provided in this embodiment includes:
a home Node B 1, adapted to send access request information of the home Node B 1;
a security access gateway 2, adapted to receive and forward the access request information of the home Node B and perform access control for the home Node B according to an authentication result; and
a first function module 3, adapted to perform access authentication for the home Node B according to the received access request information.

When the home Node B 1 accesses the mobile network, the security access gateway 2 of the mobile network needs to be accessed first. A security link is established between the home Node B 1 and the mobile network. The security access gateway 2 includes an information receiving and forwarding module 21, which is adapted to receive and forward information. The information analyzing module 22 is connected with the information receiving and forwarding module 21, and is adapted to analyze the received information. The access deciding module 23 is connected with the information analyzing module 22, and is adapted to control the home Node B access according to the analysis result. After the information receiving and forwarding module 21 receives the access request information of the home Node B and the access request information is analyzed by the information analyzing module, the information receiving and forwarding module 21 forwards the access request information to the first function module 3, and the first function module 3 performs access authentication for the home Node B according to the access request information. The first function module 3 is a device authentication server, EMS, or subscription information authentication server, or another network function entity capable of authentication. Additionally, the first function module 3 stores the information required for authentication. For example, the subscription information authentication server stores the home Node B subscription information, and the information about the IP address segment entitled to access. After the authentication succeeds, the security access gateway receives the authentication result. The access deciding module 23 controls the home Node B 1 access according to the authentication result, and the EMS performs control to allocate the corresponding resources (such as link resource and radio resource) to the home Node B 1, thus completing the access process. In the access control system of the home Node B, the security access gateway is a control point. Through the support of other network function nodes, the control is performed before the network allocates the corresponding resources to the home Node B.

This system sufficiently fulfills the high-speed, convenience, and cost-efficiency requirements imposed by the user onto the wireless network, and fulfills the network development requirements. With the increase of network complexity and the development of wireless communication technologies, the number of home Node Bs in a network will be huge. The operators need to spare effort in the home Node B access, and the users expect to use the services of the home Node B conveniently. Such requirements are fulfilled by the home Node B access control system provided herein.

A communication device is provided in an embodiment of the present invention to control the home Node B access. The communication device includes:
an information receiving and forwarding module, adapted to receive access request information from a home Node B;
a sending module, adapted to forward the access request information; and
a control module, adapted to perform access control for the home Node B according to the authentication result.

The communication device may be a security access gateway or another network element function entity.

Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for home Node B access control, comprising:
receiving, by a security access gateway, access request information from a home Node B;
forwarding, by the security access gateway, the access request information to a network node capable of authentication for authenticating; and
performing, by the security access gateway, access control for the home Node B according to a authentication result.

2. The method according to claim 1, wherein the forwarding, by the security access gateway, the access request information to a network node capable of authentication for authenticating comprises:
checking, by the security access gateway, whether a device authentication server exists according to a device authentication server information comprised in the access request information; and
forwarding, by the security access gateway, the access request information to the device authentication server if the device authentication server exists, and
rejecting, by the security access gateway, the access if the device authentication server is not exist.

3. The method according to claim 2, wherein the forwarding, by the security access gateway, the access request information to a network node capable of authentication for authenticating further comprises:
judging, by the device authentication server, whether the home Node B is compatible with the device authentication server according to the device authentication server information comprised in the access request information, wherein the authentication fails if the home Node B is incompatible with the device authentication server; and
judging, by the device authentication server, whether the home Node B is a service object of the device authentication server if the home Node B is compatible with the device authentication server, wherein the authentication succeeds if the home Node B is a service object of the device authentication server, otherwise, the authentication fails.

4. The method according to claim 1, wherein the forwarding, by the security access gateway, the access request information to a network node capable of authentication for authenticating further comprises:
forwarding, by the security access gateway, the access request information that comprises home Node B identifier information to a subscription information authentication server; and
authenticating, by the subscription information authentication server, the home Node B according to the home Node B identifier information.

5. The method according to claim 1, wherein the forwarding, by the security access gateway, the access request information to a network node capable of authentication for authenticating further comprises:
forwarding, by the security access gateway, the access request information that comprises measurement information of the home Node B to a subscription information authentication server;
analyzing, by the subscription information authentication server, the cell/base station identifier information comprised in the measurement information;
determining, by the subscription information authentication server, area information of the home Node B; and
comparing, by the subscription information authentication server, the area information of the home Node B with area information which is entitled to access and comprised in subscription information, wherein the authentication succeeds if the area information of the home Node B accords with area information which is entitled to access and comprised in subscription information, otherwise, the authentication fails.

6. The method according to claim 5, wherein before the forwarding, by the security access gateway, the access request information that comprises measurement information of the home Node B to a subscription information authentication server, the method comprises:
measuring, by the home Node B or a mobile station bound to the home Node B, surroundings of the home Node B to obtain the measurement information; or
triggering, by the security access gateway, a physical location measurement entity to perform positioning measurement for the home Node B; and
returning, by physical location measurement entity, measurement information to the security access gateway.

7. The method according to claim 6, wherein the physical location measurement entity performs positioning measurement for the home Node B comprises:
performing, by the physical location measurement entity, positioning measurement through a Global Positioning System GPS mechanism or an Observed Time Difference of Arrival OTDOA mechanism to obtain geographic location of the home Node B.

8. The method according to claim 1, wherein the forwarding, by the security access gateway, the access request information to a network node capable of authentication for authenticating further comprises:
analyzing, by the network node capable of authentication, Internet address information of the home Node B comprised in the access request information after receiving the access request information forwarded by the security access gateway.

9. The method according to claim 8, wherein the analyzing, by the network node capable of authentication, Internet address information of the home Node B comprised in the access request information comprises:
determining, by a subscription information authentication server, the home location information of the home Node B according to the Internet address information of the home Node B; and
comparing, by subscription information authentication server, the home location information of the home Node B with location information which is entitled to access and comprised in subscription information, wherein the authentication succeeds if the home location information of the home Node B accords with the location information which is entitled to access and comprised in subscription information; otherwise, the authentication fails.

10. The method according to claim 8, wherein the analyzing, by the network node capable of authentication, the Internet address information of the home Node B comprised in the access request information comprises:
comparing, by a subscription information authentication server, the Internet address information of the home Node B with Internet address information which is entitled to access and preset in the subscription information authentication server or with binding relation information stored in the subscription information authentication server, wherein the authentication succeeds if the Internet address information of the home Node B accords with the Internet address information which is entitled to access or with the binding relation information; otherwise, the authentication fails.

11. The method according to claim 10, wherein, before the comparing, by a subscription information authentication server, the Internet address information of the home Node B with binding relation information stored in the subscription information authentication server, the method further comprises:
providing, by the home Node B, access Internet address information of the home Node B when subscribing to a service;
binding the access Internet address information of the home Node B with an identifier information of the home Node B; and
storing binding relation information in the subscription information authentication server.

12. The method according to claim 11, wherein the providing, by the home Node B, access Internet address information comprises:
providing, by the home Node B, the access Internet address information comprising access port information.

13. The method according to any one of claims 1-12, wherein, before the receiving, by a security access gateway, access request information from a home Node B, the method further comprises:
establishing a transport-layer security link between the home Node B and a mobile network.

14. The method according to claim 13, wherein the establishing a transport-layer security link between the home Node B and a mobile network comprises:
sending, by the home Node B, transport-layer security link authentication information of the home Node B to the security access gateway;
authenticating, by the security access gateway, transport-layer security link of the home Node B after receiving the transport-layer security link authentication information;
sending, by the security access gateway, authentication success information to the home Node B if the authentication succeeds, wherein the authentication success information comprises the transport-layer security link authentication information; or
sending, by the security access gateway, authentication failure information to the home Node B if the authentication fails or making no response; and
authenticating, by the home Node B, the transport-layer security link of the home Node B after receiving the authentication success information; wherein the transport-layer security link is established successfully if the authentication succeeds, otherwise, the establishment of the transport-layer security link fails.

15. The method according to claim 14, wherein, before the establishing a transport-layer security link between the home Node B and a mobile network, the method further comprises:
presetting the address of the security access gateway in the home Node B; or
configuring, by an automatic address allocation server, the address of the security access gateway for the home Node B.

16. A home Node B access control system, comprising:
a home Node B, adapted to send access request information of the home Node B;
a security access gateway, adapted to receive and forward the access request information of the home Node B and perform access control for the home Node B according to an authentication result; and
a first function module, adapted to perform access authentication for the home Node B according to the received access request information.

17. The system according to claim 16, wherein the first function module is a device authentication server, an Element Management System, EMS, or a subscription information authentication server.

18. A communication device for performing access control for a home Node B, comprising:
an information receiving and forwarding module, adapted to receive access request information from a home Node B;
a sending module, adapted to forward the access request information; and
a control module, adapted to perform access control for the home Node B according to an authentication result.
